# DEMANDE DE BREVET EUROPEEN

(11) **EP 3 487 089 A1**
(43) Date de publication de la demande: **22.05.2019**
(21) Numéro de dépôt: 18205666.3
(22) Date de dépôt: 12.11.2018
(51) Int. Cl.: H04B 7/185

(54) **SYSTÈME DE DIFFUSION D'UNE RÉFÉRENCE TEMPORELLE DANS UN AÉRONEF**

(30) Priorité: 21.11.2017 FR 1760989
(71) Demandeur: Airbus Operations S.A.S., 31060 Toulouse (FR)
(72) Inventeur: LOPEZ, Juan, 31330 GRENADE (FR); KRETZSCHMAR, Valentin, 31140 PECHBONNIEU (FR); CLAUDEL, Emilie, 31490 LEGUEVIN (FR)
(74) Mandataire: Sarraméa, Claude

(57) **Abrégé**

La présente invention concerne un système de diffusion d'une référence temporelle avionique sur un ensemble d'équipements (7) d'un aéronef, ledit système comportant une horloge maîtresse (5) configurée pour diffuser via un réseau (3) de communication sans-fil ladite référence temporelle avionique suivant au moins une fréquence prédéterminée appartenant à une bande de fréquences d'intra-communication avionique sans-fil.

## Description

### DOMAINE TECHNIQUE

La présente invention concerne la diffusion via une communication sans-fil d'une référence temporelle sur un ensemble d'équipements d'un système avionique d'un aéronef.

### ÉTAT DE LA TECHNIQUE ANTÉRIEURE

Actuellement, la distribution de la référence temporelle sur une plateforme avionique d'un aéronef peut comprendre plusieurs sources d'horloge. De manière générale, il existe trois sources d'horloge adaptées pour générer et déterminer la référence temporelle de l'aéronef. La première source est une source primaire précise issue d'un système de géolocalisation par satellite GPS (Global Positioning System) intégré en général dans un équipement de réception appelé récepteur multi mode MMR (Multi Mode Receiver). Le signal issu de la source primaire est utilisé comme une entrée pour les deux autres sources qui sont des sources secondaires. Les sources secondaires comprennent des centrales anémobarométriques ADIRU (Air Data Inertial Reference Unit) et éventuellement un équipement LRU (Line Replaceable Unit) dont la fonction dédiée est de distribuer une horloge : « LRU-Clock ».

La distribution de la référence temporelle est réalisée à travers un réseau avionique de type Ethernet commuté déterministe, conforme au standard ARINC 664 part 7. Un tel réseau peut par exemple correspondre à un réseau de communication AFDX®. Les communications dans le réseau sont réalisées sur des liens virtuels et chaque lien virtuel dispose d'un chemin réservé de bout en bout à travers le réseau. La distribution de la référence temporelle passe par une passerelle sécurisée nommée SCI (Secured Communication Interface) hébergeant une fonction dédiée à la distribution.

Toutefois, pour des raisons opérationnelles certains équipements reçoivent une référence temporelle à travers un bus et/ou une passerelle spécifique. Le choix de la distribution dépend de la validité et de la disponibilité de la source. En outre, d'autres équipements peuvent utiliser encore d'autres sources pour des besoins de maintenance à travers la passerelle SCI. Toutes ces différentes sources et passerelles augmentent la complexité de l'architecture de la plateforme avionique et de la fonction de distribution.

Par ailleurs, dû au fait que les équipements impliqués dans cette architecture sont asynchrones et en tenant compte des temps de latences induits par les différentes passerelles, le délai pour acheminer la référence temporelle est non négligeable et la précision inférée est limitée. Par exemple, le chemin reliant la source primaire (GPS), la source secondaire (ADIRU-LRU-Clock), le réseau AFDX et la passerelle SCI induit une latence de l'ordre de la seconde. En cas de panne de l'horloge LRU-Clock, la latence sera d'environ le double.

En outre, la multiplicité des sources et la complexité de l'architecture diminuent l'optimisation du temps d'initialisation nécessaire pour la distribution de la référence temporelle. De plus, en cas de perte partielle ou temporaire de la plateforme ou des équipements, la référence temporelle peut ne plus être disponible.

Le document US2017/134499 décrit un système qui est programmé pour transmettre une référence temporelle via un réseau de communication sans-fil vers un ensemble d'équipements d'un aéronef.

Le document US2013/003620 décrit un système qui utilise un protocole de temps de précision PTP en tant que moyen de synchronisation d'équipements d'un aéronef.

L'objet de la présente invention est de proposer un système de diffusion d'une référence temporelle sur un ensemble d'équipements d'un aéronef, remédiant aux inconvénients précités, minimisant la latence de transport et simplifiant l'implémentation tout en augmentant la précision et la fiabilité d'une référence temporelle commune.

### EXPOSÉ DE L'INVENTION

La présente invention est définie par un système de diffusion d'une référence temporelle avionique sur un ensemble d'équipements d'un aéronef, ledit système comportant une horloge maîtresse configurée pour diffuser via un réseau de communication sans-fil ladite référence temporelle avionique (par exemple de manière périodique) suivant au moins une fréquence prédéterminée appartenant à une bande de fréquences dédiée aux communications avioniques internes sans-fil, appelée WAIC.

Ce système de diffusion est robuste et très simple à implémenter, permettant aux différents équipements avioniques et quelles que soient leurs positions dans l'aéronef de partager de manière fiable et précise une même référence temporelle. Plus particulièrement, en s'appuyant sur une transmission hertzienne, ce système de diffusion diminue la latence de transport et assure une quasi-simultanéité de réception de la référence temporelle par les différents équipements, diminuant ainsi les effets de dispersions parmi les abonnés à l'horloge maitresse. En outre, la simplicité de cette configuration permet une gestion d'initialisation optimale et une disponibilité continue de la référence temporelle.

Avantageusement, ladite horloge maîtresse est configurée pour recevoir ladite référence temporelle avionique depuis un dispositif de réception multi mode avionique (appelé MMR) configuré pour générer le temps de référence selon une géolocalisation par satellite. Ladite horloge maîtresse peut être un équipement dédié relié audit dispositif MMR via une connexion filaire standard de type Ethernet ou peut être intégrée audit dispositif MMR.

Selon un premier mode de réalisation préféré de la présente invention, ladite horloge maîtresse est configurée pour utiliser un protocole de synchronisation de temps sur un réseau avionique sans fil.

Selon un deuxième mode de réalisation préféré de la présente invention, ladite horloge maîtresse est configurée pour émettre la référence temporelle par onde radio (modulée en amplitude ou en fréquence) dont la fréquence de la porteuse est comprise dans la bande passante des fréquences d'intra-communication avionique sans-fil, ladite onde radio étant configurée pour synchroniser des horloges internes comprises dans lesdits équipements sur la référence temporelle.

Ce mode de réalisation est très simple à implémenter et permet de limiter l'erreur totale. En plus d'être simple et robuste, ce mode de réalisation est économique en comparaison d'une implémentation d'un décodeur d'heure GPS.

Avantageusement, l'horloge interne de chaque équipement comprend un dispositif de régulation (de type quartz) et de mise à l'heure.

L'invention concerne également un système avionique comportant le système de diffusion selon l'une quelconque des caractéristiques précédentes, comportant en outre ledit ensemble d'équipements adaptés pour recevoir ladite référence temporelle avionique, chaque équipement étant configuré pour coupler une valeur de réception de ladite référence temporelle avec son horloge interne afin de déduire un temps de référence avionique commun.

Avantageusement, ladite horloge maîtresse est configurée pour émettre la référence temporelle sur des première et seconde voies selon respectivement des première et seconde fréquences prédéterminées comprises dans la bande de fréquences d'intra-communication avionique sans-fil WAIC et en ce que chacun des équipements comprend un gestionnaire de redondance desdites première et seconde voies.

Ainsi, en cas de perte de l'information de la référence temporelle sur la première voie, les équipements récepteurs utiliseront la seconde voie comme une voie de recours ou sauvegarde (backup).

Avantageusement, le gestionnaire de redondance est configuré pour fonctionner selon une logique de gestion prédéterminée sélectionnée parmi l'une quelconque des logiques suivantes :
- la référence temporelle utilisée correspond à celle reçue en premier via la première voie ou la seconde voie,
- la référence temporelle utilisée correspond à celle reçue via une seule voie sélectionnée parmi les première et seconde voies et en cas de perte de signal sur la voie sélectionnée, alors la référence temporelle utilisée correspond à celle reçue via la voie restante, et
- la référence temporelle reçue correspond à une moyenne de celles reçues via les première et seconde voies et en cas de perte de signal sur une desdites voies, alors seule la référence temporelle reçue via la voie restante est utilisée.

L'invention vise également un aéronef comportant un système avionique selon l'une quelconque des caractéristiques ci-dessus.

L'invention concerne enfin un procédé de diffusion d'une référence temporelle avionique sur un ensemble d'équipements d'un aéronef, comportant une diffusion de ladite référence temporelle avionique via une communication sans-fil suivant au moins une fréquence prédéterminée appartenant à une bande de fréquences dédiée aux communications avioniques internes sans-fil WAIC.

### BRÈVE DESCRIPTION DES DESSINS

D'autres caractéristiques et avantages de l'invention apparaîtront à la lecture de modes de réalisation préférentiels de l'invention faits en référence aux figures jointes parmi lesquelles :
La Fig. 1 représente de manière schématique un système de diffusion via une communication sans-fil d'une référence temporelle avionique sur un ensemble d'équipements d'un aéronef, selon un mode de réalisation de l'invention ;
La Fig. 2 illustre de manière schématique la date de réception de la référence temporelle par un ensemble d'équipements, selon un mode de réalisation de l'invention ;
La Fig. 3 représente de manière schématique un système avionique comportant le système de diffusion, selon un premier mode de réalisation préféré de l'invention ;
La Fig. 4 représente de manière schématique un système avionique comportant le système de diffusion, selon un deuxième mode de réalisation préféré de l'invention ; et
La Fig. 5 représente de manière schématique un système avionique comportant le système de diffusion, selon un mode particulier de réalisation de l'invention.

### EXPOSÉ DÉTAILLÉ DE MODES DE RÉALISATION PARTICULIERS

Le concept à la base de l'invention est la diffusion non déterministe d'une référence temporelle commune sur une plateforme avionique via une communication sans-fil.

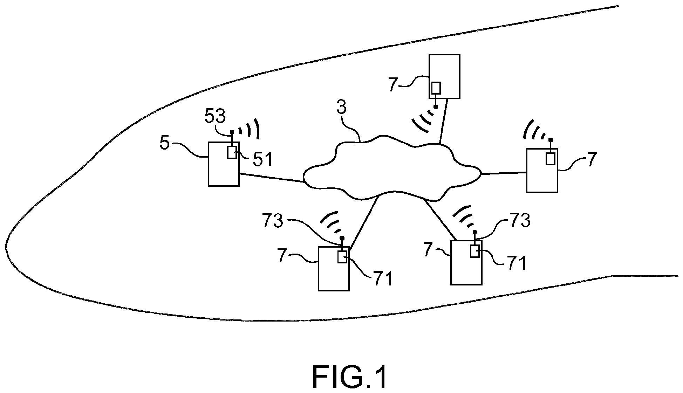

La Fig. 1 représente de manière schématique un système de diffusion via une communication sans-fil d'une référence temporelle avionique sur un ensemble d'équipements d'un aéronef, selon un mode de réalisation de l'invention.

Le système de communication sans-fil est un système d'intra-communication avionique sans-fil (i.e. dédié aux communications avioniques) appelé WAIC (Wireless Avionics Intra Communications). Le WAIC est destiné à la radiocommunication entre des composants avioniques embarqués dans un même aéronef. Ainsi, c'est un réseau de communication sans-fil fermé et exclusif à chaque aéronef. Il est destiné à des radiocommunications uniquement entre des composants à l'intérieur de l'aéronef. Il utilise une bande de fréquences comprises entre 4200 MHz et 4400 MHz.

Conformément à l'invention, le système de diffusion 1 comporte une horloge maîtresse 5 configurée pour diffuser une référence temporelle avionique sur un ensemble d'équipements 7 d'un aéronef via un réseau 3 sans-fil d'intra-communication avionique WAIC. La diffusion de la référence temporelle avionique est réalisée suivant au moins une fréquence prédéterminée par exemple comprise entre environ 4 200 MHz et 4 400 MHz appartenant à la bande de fréquences du réseau 3 sans-fil d'intra-communication avionique WAIC. La référence temporelle est ainsi distribuée de manière précise et fiable à tous les équipements 7 abonnés, quelle que soit leur position dans l'aéronef.

L'horloge maîtresse 5 est équipée d'un émetteur 51 comprenant une antenne 53 configurés pour émettre des signaux via le réseau 3 sans-fil, basés sur des fréquences appartenant à la bande de fréquence WAIC. De même, chacun des équipements 7 abonnés comporte un récepteur 71 comprenant une antenne 73 adaptés pour recevoir le signal de la référence temporelle depuis l'horloge maitresse 5. Ainsi, le système de diffusion 1 selon l'invention comporte l'horloge maîtresse 5 ainsi que les récepteurs 71 équipant les différents équipements 7 de l'aéronef.

Avantageusement, l'horloge maîtresse 5 est configurée pour émettre la référence temporelle avionique de manière périodique par exemple selon une période d'environ 500 ms de sorte que les équipements 7 reçoivent la référence temporelle également de manière périodique.

Plus particulièrement, la référence temporelle est périodiquement reçue par chacun des différents équipements 7 de l'aéronef avec un léger décalage temporel par rapport à la date d'émission de la référence temporelle. Chaque équipement 7 est configuré pour coupler cette valeur de temps de réception avec le temps de son horloge interne pour en déduire un temps de référence commun de l'aéronef.

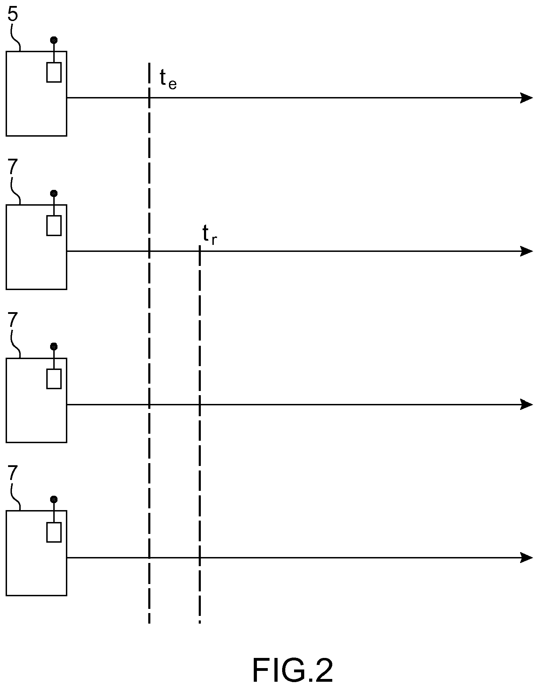

La Fig. 2 illustre de manière schématique la date de réception de la référence temporelle par un ensemble d'équipements, selon un mode de réalisation de l'invention.

Cet exemple illustre le décalage temporel ou temps de latence entre la date d'émission tₑ de la référence temporelle par l'horloge maîtresse et les dates de réception tᵣ de cette référence par les différents équipements 7. Le temps de latence est très négligeable étant donné que la vitesse de propagation du signal émis par l'horloge maîtresse 5 est de 3x10⁸ m/s. Ainsi, pour n'importe quel type d'aéronef, le temps de latence serait toujours inférieur à 0,3 microseconde. De plus, la grande vitesse de propagation du signal fait que les différents équipements 7 reçoivent la référence temporelle quasi-simultanément permettant ainsi de partager une même référence avionique.

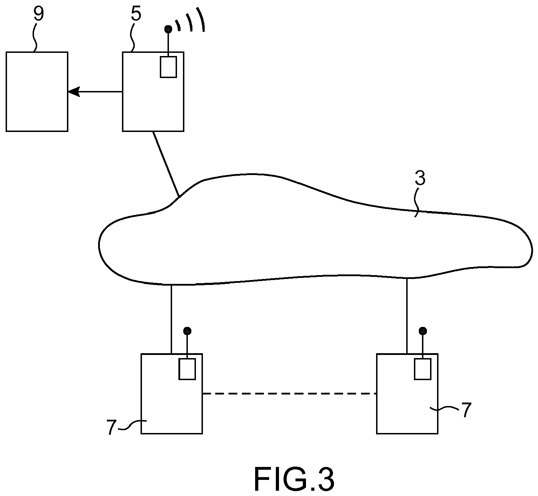

La Fig. 3 représente de manière schématique un système avionique comportant le système de diffusion, selon un mode de réalisation préféré de l'invention.

Le système avionique comporte une plateforme avionique comprenant l'horloge maîtresse 5, l'ensemble d'équipements 7, le réseau de communication sans-fil WAIC et un dispositif de réception multi mode MMR 9 (Multi Mode Receiver).

Le dispositif MMR 9 avionique est configuré pour générer le temps de référence à partir d'un système de géolocalisation par satellite de type GPS. L'horloge maîtresse 5 est configurée pour recevoir la référence temporelle avionique depuis le MMR 9 et pour diffuser périodiquement « en broadcast » la référence temporelle sur l'ensemble d'équipements 7 via le réseau 3 sans-fil d'intra-communication avionique WAIC.

Le MMR 9 est ainsi le référentiel pour l'horloge maîtresse 5 et cette dernière peut être avantageusement intégrée au dispositif MMR 9. Selon une variante, l'horloge maîtresse 5 est un équipement dédié relié au dispositif MMR via une connexion filaire standard de type Ethernet, ARINC 429, etc.

Selon un premier mode de réalisation préféré de l'invention, représenté sur la Fig. 3, l'horloge maîtresse 5 est configurée pour utiliser un protocole de synchronisation de temps sur le réseau 3 sans fil d'intra-communication avionique WAIC. Le protocole de synchronisation est similaire à ceux utilisés sur les réseaux informatiques classiques du type SNTP (Simple Network Time Protocol), PTP (Précision Time Protocol), RBS (Reference Broadcast Time Synchronization) qui sont habituellement définis pour les technologies du type WIFI.

Avantageusement, l'adressage est réalisé par diffusion selon le mode « Broadcasté » en s'appuyant sur des protocoles de communications standards telles que ZIGBee, WIFI, etc. tout en adaptant les fréquences à celles du réseau sans-fil d'intra-communication avionique WAIC et en respectant les contraintes de performances attendues concernant par exemple, le nombre d'abonnés, la distance à couvrir, etc.

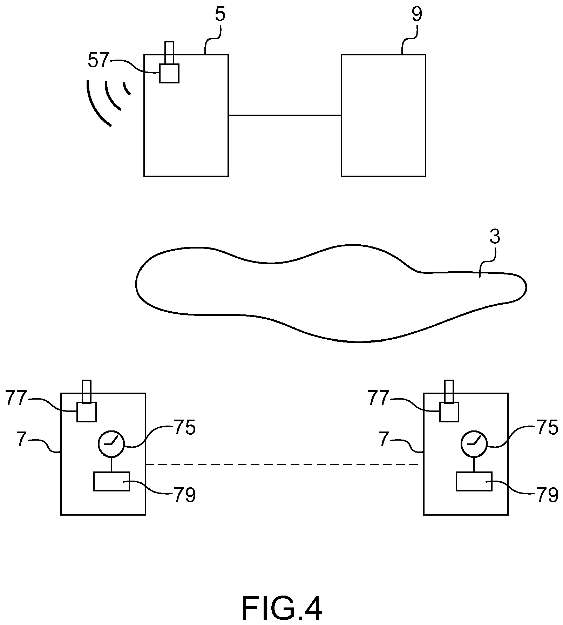

La Fig. 4 représente de manière schématique un système avionique comportant le système de diffusion, selon un deuxième mode de réalisation préféré de l'invention.

Selon ce deuxième mode de réalisation, l'horloge maîtresse 5 comprend un émetteur radio 57 configuré pour émettre une référence temporelle du type « temps universel » UTC (Universal Time Coordinate) par onde radio dont la fréquence de la porteuse est comprise dans la bande passante du réseau d'intra-communication avionique sans-fil WAIC.

L'onde radio peut être mise en oeuvre selon une modulation en amplitude ou en phase et est configurée pour piloter les horloges internes 75 comprises dans les équipements 7 afin de les synchroniser sur la référence temporelle. Les équipements 7 abonnés comportent des récepteurs 77 pour recevoir le signal radio.

On notera que le MMR 9 reste toujours le référentiel pour l'horloge maîtresse 5 et cette dernière peut être intégrée au dispositif MMR 9 ou reliée au dispositif MMR via une connexion filaire standard.

Ce mode de réalisation se base sur des approches classiques d'horloges radio-pilotées qui sont synchronisées sur un signal horaire émis par une station horaire de radio-pilotage tels que le système allemand « DCF77 » de distribution de référence horaire à 77,5 kHz ou le système français « ANFR » (Agence National des Fréquences) à 162 kHz.

Avantageusement, l'horloge interne 75 de chaque équipement 7 comprend un dispositif de régulation 79 et de mise à l'heure classique de type quartz. Ceci éventuellement permet de réaliser des corrections à l'aide du signal radio afin de palier à la perte de la réception du signal en cas de foudre ou autres effets électromagnétiques indésirables.

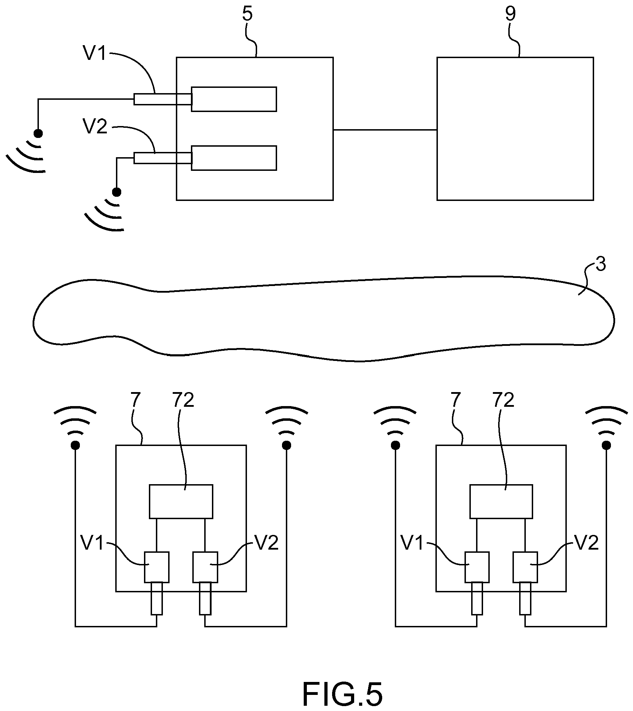

La Fig. 5 représente de manière schématique un système avionique comportant le système de diffusion, selon un mode particulier de réalisation de l'invention. On notera que ce mode de réalisation s'applique aux premier et deuxième modes des Figs. 3 et 4.

Selon ce mode particulier de réalisation, l'horloge maîtresse 5 est configurée pour émettre la référence temporelle sur des première et seconde voies V1 et V2 selon respectivement des première et seconde fréquences F1 et F2 prédéterminées comprises dans la bande de fréquences du réseau 3 sans fil d'intra-communication avionique WAIC.

En outre, chacun des équipements 7 comprend un gestionnaire de redondance 72 de ces première et seconde voies V1, V2. Le gestionnaire de redondance 72 est adapté pour sélectionner la voie valide en cas d'anomalie sur une des deux voies V1, V2.

Plus particulièrement, le gestionnaire de redondance 72 est configuré pour fonctionner selon une logique de gestion prédéterminée.

Selon un premier mode de réalisation de la logique de gestion, la référence temporelle utilisée par l'équipement 7 correspond à celle reçue en premier via soit la première voie V1 soit la seconde voie V2. Ainsi, si le premier temps horaire obtenu est celui de la première voie V1 à la fréquence F1, alors ce premier temps est sélectionné par le gestionnaire de redondance 72 pour être utilisé par l'équipement 7.

Selon un deuxième mode de réalisation de la logique de gestion, la référence temporelle utilisée correspond à celle reçue via une seule voie sélectionnée parmi les première et seconde voies V1, V2 et en cas de perte de signal sur la voie sélectionnée, alors la référence temporelle utilisée par l'équipement 7 correspond à celle reçue via la voie restante. Par exemple, la seule voie utilisée habituellement peut être la première voie V1 (selon la fréquence F1) et si cette première voie V1 est perdue, alors, le gestionnaire de redondance 72 utilise la deuxième voie V2 selon la fréquence F2.

Selon un troisième mode de réalisation de la logique de gestion, la référence temporelle reçue correspond à une moyenne de celles reçues via les première et seconde voies V1, V2 et en cas de perte de signal sur une de ces deux voies, alors seule la référence temporelle reçue via la voie restante est utilisée par l'équipement. Ainsi, de manière habituelle, le gestionnaire de redondance 72 calcule la moyenne de la première référence temporelle reçue via la première voie V1 et de la deuxième référence temporelle reçue via la deuxième voie V2. Si une des deux voies est perdue, alors le gestionnaire de redondance sélectionne la voie qui reste valide sans moyenner.

## Revendications

1. Système de diffusion d'une référence temporelle avionique sur un ensemble d'équipements (7) d'un aéronef, ledit système comportant une horloge maîtresse (5) configurée pour diffuser via un réseau (3) de communication sans-fil ladite référence temporelle avionique suivant au moins une fréquence prédéterminée appartenant à une bande de fréquences dédiée aux communications avioniques internes sans-fil, **caractérisé en ce que** ladite horloge maîtresse est en outre configurée pour émettre la référence temporelle sur des première et seconde voies (V1, V2) selon respectivement des première et seconde fréquences prédéterminées comprises dans ladite bande de fréquences dédiée aux communications avioniques internes sans fil.

2. Système de diffusion selon la revendication 1, **caractérisé en ce que** ladite horloge maîtresse (5) est configurée pour recevoir ladite référence temporelle avionique depuis un dispositif de réception multi mode avionique (9) configuré pourgénérer le temps de référence selon une géolocalisation par satellite.

3. Système de diffusion selon la revendication 1 ou 2, **caractérisé en ce que** ladite horloge maîtresse (5) est configurée pour utiliser un protocole de synchronisation de temps sur ledit réseau (3) avionique sans fil.

4. Système de diffusion selon l'une quelconque des revendications précédentes, **caractérisé en ce que** ladite horloge maîtresse (5) est configurée pour émettre la référence temporelle par onde radio dont la fréquence de la porteuse est comprise dans la bande passante des fréquences d'intra-communication avionique sans-fil, ladite onde radio étant configurée pour synchroniser des horloges internes (75) comprises dans lesdits équipements (7) sur la référence temporelle.

5. Système de diffusion selon l'une quelconque des revendications précédentes, **caractérisé en ce que** l'horloge interne (75) de chaque équipement (7) comprend un dispositif de régulation (79) et de mise à l'heure.

6. Système avionique comportant le système de diffusion selon l'une quelconque des revendications précédentes, **caractérisé en ce qu'**il comporte en outre ledit ensemble d'équipements (7) adaptés pour recevoir ladite référence temporelle avionique, chaque équipement (7) étant configuré pour coupler une valeur de réception de ladite référence temporelle avec son horloge interne (75) afin de déduire un temps de référence avionique commun.

7. Système avionique selon la revendication 6, **caractérisé en ce que** chacun des équipements (7) comprend un gestionnaire de redondance (72) desdites première et seconde voies.

8. Système avionique selon la revendication 6 ou 7, **caractérisé en ce que** ladite bande de fréquences dédiée aux communications avioniques internes sans fil est une bande de fréquences d'intra-communication avionique sans-fil WAIC.

9. Système avionique selon l'une quelconque des revendications 6 à 8, **caractérisé en ce que** le gestionnaire de redondance (72) est configuré pour fonctionner selon une logique de gestion prédéterminée sélectionnée parmi l'une quelconque des logiques suivantes :
- la référence temporelle utilisée correspond à celle reçue en premier via la première voie ou la seconde voie,
- la référence temporelle utilisée correspond à celle reçue via une seule voie sélectionnée parmi les première et seconde voies et en cas de perte de signal sur la voie sélectionnée, alors la référence temporelle utilisée correspond à celle reçue via la voie restante, et
- la référence temporelle reçue correspond à une moyenne de celles reçues via les première et seconde voies et en cas de perte de signal sur une desdites voies, alors seule la référence temporelle reçue via la voie restante est utilisée.

10. Aéronef comportant un système avionique selon l'une quelconque des revendications 6 à 9.

11. Procédé de diffusion d'une référence temporelle avionique sur un ensemble d'équipements (7) d'un aéronef, **caractérisé en ce qu'**il comporte une diffusion de ladite référence temporelle avionique via un réseau (3) de communication sans-fil sur des première et seconde voies (V1, V2) selon respectivement des première et seconde fréquences prédéterminées comprises dans une bande de fréquences dédiée aux communications avioniques internes sans fil.
